# EUROPEAN PATENT SPECIFICATION

(11) **EP 3 030 089 B1**
(45) Date of publication and mention of the grant of the patent: **28.10.2020**
(21) Application number: 14772440.5
(22) Date of filing: 31.07.2014
(51) Int. Cl.: A23G 1/50, A23G 1/22

(54) **COMESTIBLE PRODUCT**
ESSBARES PRODUKT
PRODUIT COMESTIBLE

(30) Priority: 07.08.2013 GB 201314145
(43) Date of publication of application: 15.06.2016
(73) Proprietor: Kraft Foods Schweiz Holding GmbH, 6300 Zug (CH)
(72) Inventor: HARRIS, Adam, Bournville Birmingham B30 2LU (GB); BOULTON, Oliver James, Bournville Birmingham B30 2LU (GB); WATKINS, Clare Louise, Bournville Birmingham B30 2LU (GB); CARVAJAL, Ricardo, Bournville Birmingham B30 2LU (GB)
(74) Representative: Ward, David Ian
(86) International application number: PCT/IB2014/063587
(87) International publication number: WO 2015/019252

(56) References cited:
- EP-A1- 2 428 120
- WO-A1-88/04897
- WO-A1-03/088750
- WO-A1-2010/133835
- WO-A2-01/35758
- CA-A1- 2 365 187
- DE-U1- 9 415 022
- GB-A- 612 029
- GB-A- 983 810
- RU-U1- 43 129
- US-A1- 2010 196 548
- Dom Ramsey: "Hotel Chocolat "Peel Me An Orange" Dark", , 13 October 2008 (2008-10-13), XP055607899, Retrieved from the Internet: URL:http://www.chocablog.com/reviews/hotel -chocolat-peel-me-an-orange-dark/ [retrieved on 2019-07-23]

## Description

The present invention relates to a comestible product. More specifically, but not exclusively, the present invention is related to a frangible product suitable for sharing.

It is customary that confectionery items are broken up to reduce their size prior to consumption, or for sharing. Also, selection boxes typically comprise a number of individual items ready for consumption or sharing. A related concept is that of the Chocolate Orange (RTM) originally developed by Terry's, now owned by Mondelez International, which is marketed with the straplines 'Whack and Unwrap' and 'Tap It and Unwrap It'. The Chocolate Orange' is a generally spherical chocolate product mimicking an orange in size and shape as it is known in Europe. It is made of several chocolate segments joining at a core. Upon tapping the Chocolate Orange with sufficient force the orange breaks apart, thereby exposing individual segments. Various copies of the Chocolate Orange are produced by different manufacturers. This supports the idea that sharable products are popular among consumers.

WO 88/04897 A1 discloses an eatable plate to be broken by hand, wherein the surface of the plate is provided with grooves designed so that the grooves and edges of the plate form squares inside each other which are turned by 45 degrees with respect of each other.

GB 612 029 A describes a chocolate slab with notches which leave a minimum break-off thickness of chocolate, except at the edges of the slab where the notch is less deep to give a greater thickness to strengthen against accidental breakage.

US 2010/196548 A1 depicts a sweet goods product having a base body consisting of a first sweet goods material that exhibits at least one depression, and at least one insert in the depression and consisting of a second sweet goods material.

WO 01/35758 A2 is concerned with a chocolate product having a break-away portion of a sheet-like member. The break-away portion frangibly detaches in order to form an opening that provides access through the opening.

WO 03/088750 A1 shows a food product which comprises a body and at least one curved valley formed in the body. The curved valley is preferably dimensioned and adapted to receive a rim of a drink or food vessel. The curved valley also forms a frangible line for separation of the body into separate elements.

CA 2 365 187 A1 describes an edible wishbone, with projecting arms, with the function to intentionally fracture and break into two uneven fragments when the projecting arms are tugged in opposing directions by the fingers of one or more persons.

GB 983 810 A claims a pill-type tablet structure comprising a plurality of divisible sections.

DE 9 415 022 U1 covers a pill-like body with a pre-formed breaking score for breaking the body.

Dom Ramsey: "Hotel Chocolat "Peel Me An Orange" Dark", 13 October 2008 (2008-10-13) discloses a disc-shaped chocolate product resembling a slice of orange, with a small cavity in the centre. The product is scored so that it can be broken into segments.

The present invention aims to provide a product offering an improved sharing experience.

In accordance with a first aspect of the present invention, there is provided a confectionery product as defined in claim 1.

It will be understood that when the first end of the product is placed on a surface, a manual force applied to the breakage initiation region towards the first end of the product moves at least a portion of the breakage initiation region into the recess and causes controlled breakage of the frangible portions from the breakage initiation region.

By breakage initiation region is meant a region that is configured to allow the product to be broken up in response to application of a compressive manual force to the breakage initiation region. The breakage initiation region may be characterised as comprising an outward-facing surface to which the force is to be applied. The outward-facing surface may have an area of at least 1 cm², 2 cm², 3 cm², 4 cm², 5 cm², 6 cm², 7 cm², 8 cm², 9 cm², 10 cm², or more than 12 cm², so as to be accessible for a human finger or knuckle. The second end may overlap with or be constituted by the breakage initiation region.

By controlled breakage is meant that the frangible portions are configured to break at predetermined breaking features whereby the product is configured to break up into the frangible portions.

The manual force may be exerted by a consumer, e.g. by depressing the product with a finger. In some embodiments, the manual force required to initiate breakage may be not higher than 50 N, 45 N, 40 N, 35 N, 30 N, 25 N, 20 N, 15 N, or 10 N. Such force levels can be exerted by a thumb or finger pressing against a surface.

In an embodiment, individual frangible portions mutually interconnect at the breakage initiation region. In other embodiments, all frangible portions are mutually separate, each joining the breakage initiation region at a different location thereof. In an embodiment, each free end is configured to provide one of a single-point contact, a two-point contact, or a line contact with a (horizontal) surface upon which the first end of the product is to be placed.

Thus, individual frangible portions are unstable when balanced on their free ends. The frangible portions can be understood as being held together by the breakage initiation region. When the product is broken up by depressing the breakage initiation region, the frangible portions are no longer held together by the breakage initiation region and thus topple. This adds to the perception of a product smashing into pieces when pressed.

In an embodiment, the frangible portions are elongate. The free ends may be arranged towards or at the periphery of the product.

Elongate frangible portions and the peripherally arranged free ends reduce the stability of the individual portions. This facilitates a collapse of the product in response to depressing the breakage initiation region.

The distance between the first end and the second end defines the height of the product. The frangible portions may extend laterally from the breakage initiation region. The free ends of two opposite frangible portions may define a maximum product width. The maximum product width may be at least 4, 5, 6, 7, or 8 times the height of the product. The breakage initiation region may be located centrally of the product.

The shape, location, and relative configuration of the peripheral free ends, the breakage initiation region, the elongate frangible portions, the lateral extent of the product, or any combination of these features can be designed to alter the leverage for breaking the product by depressing the product at the breakage initiation region.

In an embodiment, there are at least 3, 4, 5, 6, 7, 8, 9, 10, 11, 12, 13, 14, 15, 16, 17, 18, or 20 frangible portions. The product may be symmetric, bisymmetric, or radially symmetric.

A plurality of frangible portions increases the perception of a product being smashed into pieces.

The predetermined breaking features are provided in the form of regions of weakness within the product. Regions of weakness are areas of reduced structural strength. This may be provided by, for example, a reduced cross-sectional area, and/or by incorporating an aerated portion, and/or by modifying the composition of the product at the location of the breaking feature.

The regions of weakness increase the design freedom for setting the force level required to initiate or effect breaking.

In an embodiment, each of the regions of weakness has the same strength. This increases the likelihood of the frangible portions breaking from the product almost simultaneously when breakage is initiated. By "simultaneous", it is meant that the consumer may experience a momentary breaking, or smashing, of the frangible portions in response to an application of a manual force.

The product may be composed of different components. For example, the breakage initiation region may have a different composition to the remainder of the product. This allows the product to be tailored to different target markets. The breakage initiation region may be constituted by a predetermined breaking feature between frangible portions.

It will be appreciated that in practice the exact breaking pattern will depend on multiple factors, and that therefore a few of the frangible portions may remain connected to one another or to the breaking initiation region after the breaking initiation region has been depressed. Also, the breaking pattern of or within the breakage initiation region may differ depending on the form in which it is provided. The breakage initiation region may be formed so that it remains intact after the frangible portions have broken from it. However, in many of the tested configurations it was observed that the breakage initiation region itself breaks upon breaking the product. In that case, individual portions or fragments of the breakage initiation region may remain attached to the separated frangible portions.

The breakage initiation region may be a "core" piece of circular, or generally circular, shape. The frangible portions are connected to the breakage initiation region, i.e., to the core piece, via a region of weakness. Thus, the breakage initiation region may effectively be surrounded by one or more regions of weakness, where the individual frangible portions connect to the breakage initiation region. In embodiments in which consecutive frangible portions connect (via regions of weakness) centrally to a core piece and laterally to their respective neighbouring frangible portions, the region of weakness surrounding the core piece is a continuous region of weakness. The breakage initiation region may be structurally stronger, e.g. thicker, than the one or more surrounding regions of weakness. This increases the likelihood of the breakage initiation region remaining intact after breaking up the product.

Factors influencing the breaking pattern may include manufacturing conditions, the design of predetermined breaking features, the magnitude, location and direction of the applied manual force, and also surface properties or temperature. For instance, if a force is not applied exactly axially to a symmetric product, as can be imagined that in practical circumstances, due to the different force vectors, only some frangible portions may break off individually, and others may remain attached to the breaking initiation region. Nevertheless, the impression on the consumer would be a simultaneous breaking up of the product.

The breakage initiation region may be indicated to the consumer by a marking on the second end, i.e., on the side of the product facing away from the recess. For instance, the marking may indicate the centre of the breakage initiation region. Likewise, the marking may indicate the outline of the breakage initiation region. This provides guidance to a consumer to achieve a breaking effect closely to what was intended at the design stage, by pressing the breakage initiation region at the marking, or inside a marked area.

The product may be a single-moulded product. This facilitates the manufacture of the product and reduces associated cost.

The frangible portions of a product may have the same shape. A product may comprise a first type of frangible portion having a first shape and a second type of frangible portion having a second shape different from the first shape. A product may further comprise a third or more types of frangible portion having a third or more shapes that differ from the first and second shapes.

Where frangible portions have different shapes, the first end of the product may be constituted by the free ends of the first type of frangible portion. In other words, the first type of frangible portion may have first free ends that lie on a first plane, constituting the first end of the product, and the second type of frangible portion may have second free ends that lie on a second plane that is different from the first plane, and located between the first end and the second end.

This allows additional internal stress to be introduced during application of a force. When the product lies on the first free ends on a surface, the second free ends do not contact the surface, because they lie between the first end of the product and the second end of the product, and, thus, do not extend as far towards the surface as the first free ends. As the breakage initiation region is moved towards the recess, the product may deform, initially, only slightly and so the second free ends may, under pressure, come into contact with the surface before the product breaks. Thereby, contact points are established by the first free ends and the second free ends. However, because the first type and the second type of frangible portions have differently distanced free ends, the pressure levels exerted from the breakage initiation region are different, causing internal stress. This facilitates the breaking away of the frangible portions from each other.

The possibility to shape frangible portions differently increases the options for altering the breaking behaviour and stability of the pieces. E.g., a product may comprise a first group of pieces that are configured to topple inward and a second group of pieces configured to topple outward.

The frangible portions may contain a filling. The comestible product may be a shell, e.g., a cold-stamped shell or a moulded shell. The shell may define a plurality of cavities, and the filling may be provided in the cavities. Each cavity may correspond to a frangible portion. Grooves (corresponding to ridges on the inside) of the shell may constitute the regions of weakness. Thus, it can be ensured that the regions of weakness are free of filling. This avoids that the consistency of the filling affects the breaking behaviour along a region of weakness.

Preferably, the filling is solid or highly viscous at standard ambient temperature and pressure (SATP, 25°C and 100kPa). By "highly viscous", it is meant that the viscosity is higher than around 10,000, 15,000, 20,000, 30,000, or 50,000 centipoise. This is to avoid the filling running out if a frangible portion happens to break apart. For instance, the filling may be liquid enough to allow it to be deposited during manufacture, but solidify in the final product.

The frangible portions may contain inclusions. Preferably, the frangible portions are so large as to accommodate one or more inclusion pieces. By "accommodate", it is meant that the volume of the frangible portion is so large as to allow inclusion to be enveloped by product mass. By dimensioning frangible portions so large as to facilitate the location of inclusions therein, inclusions are less likely to remain along predetermined breaking features. This is advantageous, because the breaking behaviour along the predetermined breaking features is more consistent, and thus easier to design at the product design stage, if this is not affected by random presence of inclusions.

The product may be solid at standard ambient temperature and pressure (SATP, 25°C and 100kPa). It is understood that the product should be rigid enough at standard ambient temperature and pressure so as to be breakable, in order to provide a smashing effect.

The product is a confectionery product. Confectionery products include chocolate, sugar confectionery, candy, chewing gum, nougat, caramel, or toffee.

The term 'chocolate' in the context of the present invention is not restricted by the various definitions of chocolate provided by government and regulatory bodies. A 'chocolate' may be a dark chocolate, a milk chocolate or a white chocolate.

The chocolate comprises at least one fat. The fat may be cocoa butter, butterfat, a cocoa butter equivalent (CBE), a cocoa butter substitute (CBS), a vegetable fat that is liquid at standard ambient temperature and pressure (SATP, 25°C and 100kPa) or any combination of the above. In a particular embodiment, the chocolate comprises cocoa butter.

CBEs are defined in Directive 2000/36/EC. Suitable CBEs include illipe, Borneo tallow, tengkawang, palm oil, sal, shea, kokum gurgi and mango kernel. CBE's are usually used in combination with cocoa butter. In one embodiment, the chocolate comprises no more than 5wt% CBE's.

The chocolate may comprise a cocoa butter substitute (CBS) (sometimes known as a cocoa butter replacer, CBR) in place of some or all of the cocoa butter. Such chocolate materials are sometimes known as compound chocolate. Suitable CBS's include CBS laurics and CBS non-laurics. CBS laurics are short-chain fatty acid glycerides. Their physical properties vary but they all have triglyceride configurations that make them compatible with cocoa butter. Suitable CBS's include those based on palm kernel oil and coconut oil. CBS non-laurics consist of fractions obtained from hydrogenated oils. The oils are selectively hydrogenated with the formation of trans acids, which increases the solid phase of the fat. Suitable sources for CBS nonlaurics include soya, cottonseed, peanut, rapeseed and corn (maize) oil.

The chocolate may comprise at least one vegetable fat that is liquid at standard ambient temperature and pressure (SATP, 25°C and 100kPa). Suitable vegetable fats include corn oil, cotton seed oil, rapeseed oil, palm oil, safflower oil, and sunflower oil.

The present invention is further applicable to chocolate in which some or all of the fat is constituted by a partly or wholly non-metabolisable fat, for example Caprenin.

In one embodiment the chocolate comprises fat (e.g. cocoa butter or a cocoa butter equivalent or cocoa butter substitute), a bulk sweetener (e.g. a sugar or sugar substitute) and non-fat cocoa solids (e.g. from cocoa liquor or cocoa mass).

In an embodiment, the product is frozen, i.e. the product may be made from a composition having a freezing temperature below standard ambient temperature and pressure but whose temperature is below its freezing temperature.

Inclusions may comprise nuts, crushed nut pieces, grain cereals, puffed grain cereals, pieces of dried fruit pieces, candy, caramel, toffee, honeycomb, jelly, malt balls, cookie chunks, and combinations thereof.

In accordance with a second aspect of the present invention, there is provided a mould suitable for the manufacture of a product in accordance with the first aspect. Such a mould may comprise:
a mould body defining a mould cavity;
the mould cavity comprising a plurality of concave portions; and
a passage connecting the concave portions;
wherein each portion comprises a low point for formation of a free end of the product to be formed.

A low point is understood as the deepest part of the surface of passage within the mould cavity. The deepest part of a portion is understood to correspond, on the product to be formed, to one of a single-point contact end, a two-point contact end, or a line contact end.

The low points of the mould lie on a plane. This facilitates the manufacture of a product that may be placed stably on a planar surface. The low points may be peripheral within the mould.

The mould cavity may further comprise a plurality of projections separating the portions within the cavity. These projections may define weakness features within the product to be formed.

In accordance with a third aspect of the present invention, there is provided a method for forming a product in accordance with the first aspect, the method including the steps of:
providing a mould in accordance with the second aspect;
filling the mould with a flowable mass; and
letting the mass solidify.

The mould may be a disposable mould. The mould may serve as a protective cover for the product. Alternatively, the method may comprise a further step of demoulding.

Embodiments of the present invention are now described with reference to the Figures, in which:
Fig 1A shows a perspective view and a side view of a first embodiment in one orientation relative to a surface;
Fig 1B shows a perspective view and a side view of the first embodiment in a second orientation relative to a surface;
Fig 1C is a picture of the first embodiment after it has been broken;
Fig 2A and 2B are perspective views of a second embodiment, which is not in accordance with the claimed invention, in different orientations;
Fig 3A is a perspective view of a third embodiment;
Fig 3B is a perspective view of the third embodiment after it has been broken;
Fig. 4 is a perspective view of a fourth embodiment, which is not in accordance with the claimed invention;
Fig. 5A and 5B are perspective views of a fifth embodiment, which is not in accordance with the claimed invention, in different orientations;
Fig. 6A shows a top view of a sixth embodiment;
Fig. 6B and 6C show side views of the sixth embodiment in different orientations;
Fig. 6D and 6E show cutaway views of the sixth embodiment in different orientations;
Fig. 7A shows a perspective view of a seventh embodiment;
Fig. 7B shows a top view of the seventh embodiment;
Fig. 7C and 7D show side views of the seventh embodiment in different orientations;
Fig. 8A shows a perspective view of an eighth embodiment;
Fig. 8B shows a top view of the eighth embodiment;
Fig. 8C and 8D show side views of the eighth embodiment in different orientations;
Fig. 9A shows a top view of a ninth embodiment; and
Fig. 9B and 9C show side views of the ninth embodiment in different orientations.

In the following examples the product is milk chocolate. It will be understood that other forms of chocolate or non-chocolate foodstuffs could be utilised.

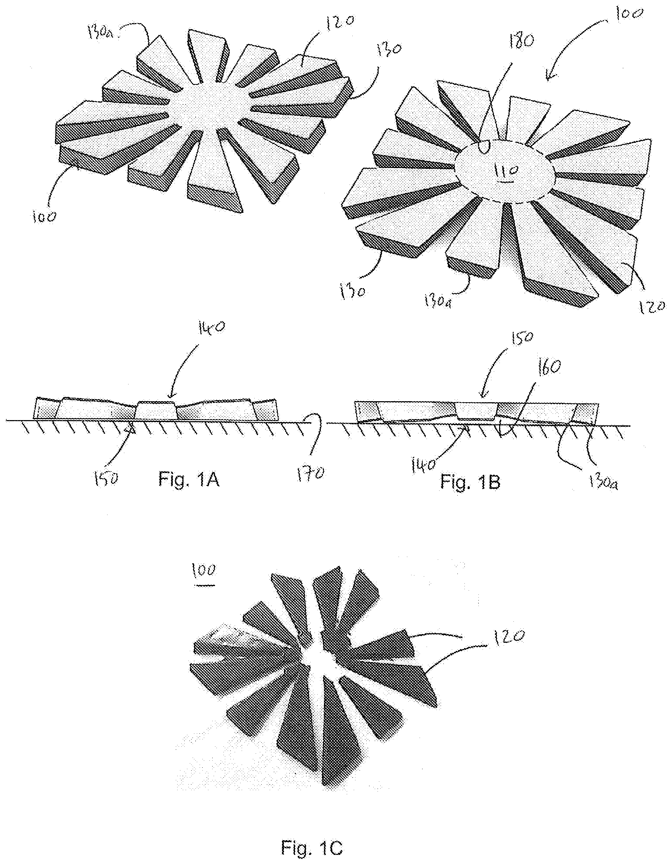

Referring to Figure 1, bar 100 has of a centrally located disc-shaped core 110 from which a plurality (here: twelve) of frangible arms 120 extend outwardly. In use, the core 110 serves as a breakage initiation region. The twelve arms 120 are equiangularly spaced apart. Other embodiments may comprise a different number of arms and/or a different radial spacing pattern. Each arm 120 terminates in a free end 130. Viewed from above the bar 100 has a square outline. The outline may however be rectangular or any other shape. Bar 100 is a single-moulded chocolate product. However, other ingredients may be used.

The bar 100 has a first, generally dished major face 140, corresponding to its first end, and a second planar majorface 150, corresponding to its second end. In the orientation shown in Figure 1A the bar 100 has its planar face resting on the surface. In Figure 1B, the bar 100 is shown inverted, i.e. with the dished face touching the surface. In this latter configuration, the bar is ready to be broken by application of manual force.

The dishing of the first major face results from a gradual thinning of the arms 120 from their free ends 130 towards the core 110. As best seen in the side view of Figure 1B, a recess 160 is defined between the arms and below the core. Linear edges 130a of the free ends 130 lie in a common plane and provide a line contact with the surface 170 on which the product rests. As shown in Figure 1B, these linear edges are the only points of contact of the bar with the surface.

The sides of each arm 120 taper outwardly so that their width increases away from the core 110. Consequently, each arm 120 is thinnest both in terms of height and width where it joins the core 110. The thinnest cross-sectional diameter of each arm 120 is a structural point of weakness and thus constitutes a predetermined breaking feature 180. The predetermined breaking feature 180 is indicated as a dashed line in Figure 1B, but it is appreciated that the line may not be visible on the product, and that the actual breaking pattern may not follow the breaking feature 180.

Because the core 110 is circular and the outline of the bar 100 is a square, the arms have differing lengths and a shape tapered at an angle to define the square outline. In embodiments in which each arm has the same length, the outline of the slab would be circular. In this manner, the outline of different embodiments may be modified by adjusting the length of the arms and/or their outer edge.

Figure 1C shows a bar 100 akin to that of Figures 1A to 1B after it has been smashed. The arms 120 have been broken off by depressing the core 110 using a finger. In Figure 1C, the fragments have been rearranged to better illustrate their separation. In practice, pieces may lie closer together after breaking. Close inspection of Figure 1C shows that the core 110 is broken into fragments. Four of the twelve frangible arms 120 have been broken off individually. The remaining eight arms have broken off in (four) pairs, each pair connected by a fragment of the core 110. It will be appreciated that the breaking pattern depends on various factors, such as application of the pressure force (point, direction, and magnitude), presence of weak lines etc. Nevertheless, Figure 1C illustrates that the bar 100 could be smashed into a plurality of frangible portions.

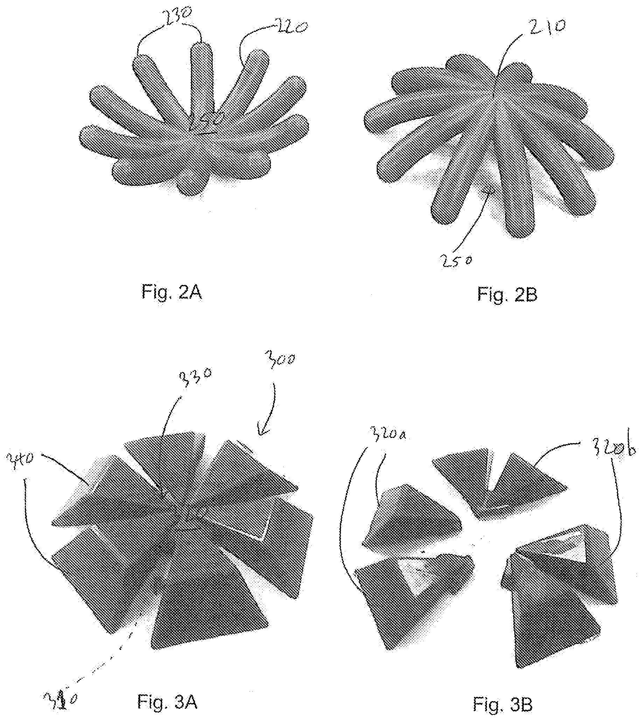

Figures 2A and 2B show a product 200 having a plurality of fingers radiating from a central point to form a radially symmetric bowl shape.

The bowl shape is formed from 10 fingers which mutually interconnect at a common junction constituting a breakage initiation region 210. From the breakage initiation region 210 each finger extends outwardly, initially radially and then gradually bending to form the bowl shape, finally terminating in a free end 230. The fingers define between them a concave recess 250. Each finger 220 has a circular cross-section, but it can be appreciated that the cross-section may be different. Each free end 230 is rounded off and provides a contact point with a surface on which the product 200 is to be placed. The contact points lie on a circumference surrounding the recess 250. Figure 2A shows the product face-up with the ends of the fingers (corresponding to the first end of the product) remote from the surface (not shown), and Figure 2B shows the product face down with the ends of the fingers in contact with the surface.

When the product 200 is placed on a surface supported by the ends of the fingers 230 as shown in Figure 2B, the breakage initiation region 210 may be depressed, thereby causing a plurality of the frangible portions 220 to snap off.

Figure 3A shows a product 300 similar to that shown in Figure 1. In line with the above description, the product 300 has planar 310 and dished 320 major faces, a disc shaped core 330 and a plurality of radially extending arms 340 (here: six), with a recess being defined between the arms 340 and the core 330. The outline of the product is hexagonal. In this example the arms 340 have a triangular cross section and are thicker at their intersection with the core than the core itself. As previously, the dishing is effected by the tapering of the arms 340.

Figure 3B shows the product 300 after it has been broken into fragments. For clarity, it is mentioned that the fragments in Figure 3B have been turned over. Two of the six arms 320 are now separate fragments 320a. Two other fragments 320b are made up of two each of the remaining four arms 320 and part of the core 330. Nevertheless, Figure 3B illustrates the smashing of the product 300 into a plurality of individual segments.

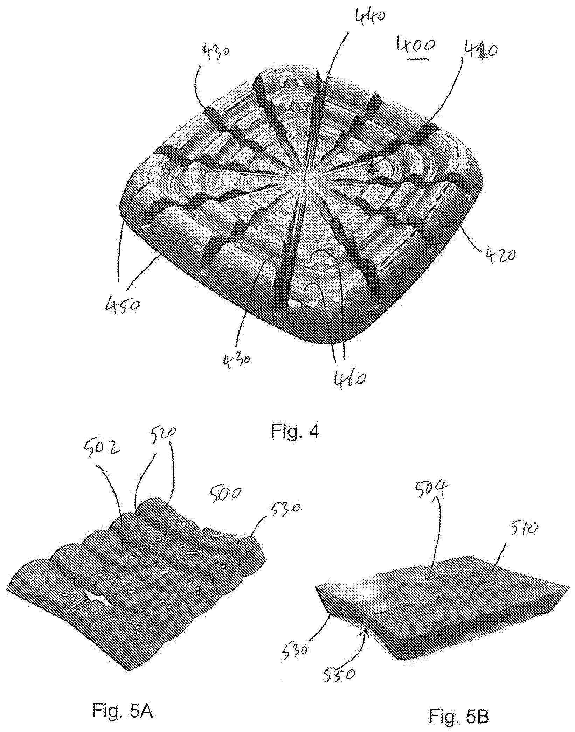

Figure 4 shows a slab product 400 which is has a generally square outline with rounded edges. The base (second end) of the product 400 is planar (not shown) with its upper surface 410 being generally dished. In order to initiate breakage it will be appreciated that the product 400 will be inverted such that a line contact (part thereof indicated by a dashed line 420) will be made with the surface. The upper surface 410 has a complex topography. A plurality of equiangularly spaced grooves 430 extend radially from the centre 440 of the product and define twelve frangible portions 450. It will be understood that unlike previous embodiments each portion is connected to its neighbours along its length. The grooves 430 constitute predetermined breaking features. The centre 440 of the product 400 is the thinnest portion of the slab and constitutes (on the base) the breakage initiation region (not shown).

In addition to the grooves 430, the upper surface is provided with a series of outwardly extending undulations 460 (ripples) which increase in amplitude towards the periphery of the product.

Figures 5A and 5B show a rectangular slab product 500 having a first major face (first end) 502 (facing up in Figure 5A) and a second planar major face (second end) 504 (facing up in Figure 5B). The product 500 comprises a thin centre line 510 constituting a breakage initiation region (indicated as dashed line in Figure 5B). From the breakage initiation region 510, ten frangible portions 520 extend outwardly (five frangible portions each to either side of the breakage initiation region). Each frangible portion 520 thickens from the breakage initiation region 510 towards the periphery of the slab 500, thereby defining a concave recess 550 between the frangible portions 520. The maximum thickness of each frangible portion 520 defines its free end 530 which ends form contact points with the surface in the orientation of Figure 5B.

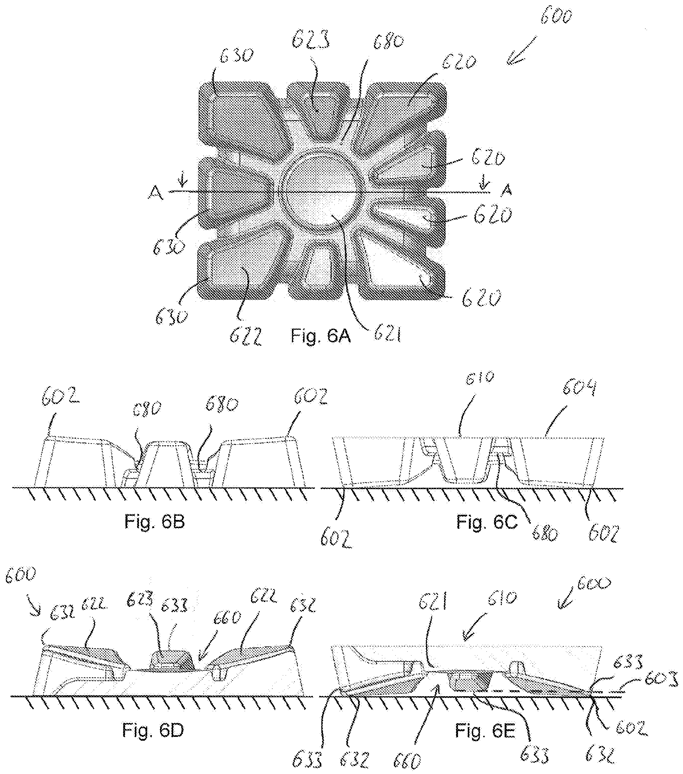

Figures 6A to 6E show a quadrilateral slab product 600 having a first end 602 and a second end 604. The product 600 comprises a flat surface area 610, the centre of which constitutes a breakage initiation region. Slab 600 comprises a centre chunk 621 surrounded by a groove 680. The groove 680 constitutes a predetermined breaking feature via which the centre chunk 621 is connected to a plurality of (here: nine) chunks 620, each chunk 620 constituting a frangible portion. Each chunk 620 is shaped slightly differently, but generally tapers outward (towards the periphery of slab 600) and adjoins with its respective neighbour chunks 620 via grooves 680 to form a generally square outline (generally square in the orientation of Figure 6A). Grooves 680 constitute predetermined breaking features.

Each chunk 620 terminates in a free end 630. Of the nine chunks 620, four are corner chunks 622, each with a free end 632, and the remaining chunks are side chunks 623, each with a free end 633. Figures 6B to 6E show that the free ends 632 of each of the four corner chunks 622 are slightly higher than the free ends 633 of the side chunks 623. The free ends 632 thus constitute a first free end lying on a first plane, and the free ends 633 constitute second free ends lying on a second plane 603 between the first end 602 and the second end 604. Figure 6E shows free ends 632 contacting the surface at the first end 602, and free ends 633 not in contact with the surface, lying on the second plane 603.

Figures 6B and 6C show a side view corresponding to that of Figures 1A and 1B. In the orientation of Figure 6B, the slab 600 lies on its planar surface area 610 constituting the second end. In Figure 6C, the slab 600 is depicted lying face-down on a surface. In Figure 3C, the slab 600 lies on the free ends 632 of the corner chunks, whose contact points with the surface define the first end 602.

Figures 6D and 6E show a cut-away view along the section A-A of Figure 6A. Figures 6D and 6E show the dished surface of slab 600, defining a recess 660 resulting from the gradual thinning of the chunks 620 towards the centre of the product.

The slab 600 is intended to be broken into pieces in the orientation shown in Figures 6C and 6E, lying face-down. Application of a force in the centre of the slab 600, approximately opposite the centre chunk 621, will depress the centre chunk 621 towards and into the recess 660, and cause the nine chunks 620 to break away. The breaking away of each chunk 620 is assisted because the breakage initiation region is initially depressed until the free ends 633 of the side chunks 623 abut against the surface. Because the free ends 633 are not as high as the free ends 632, a stress is introduced into the slab that facilitates, upon further application of force, the near-simultaneous breaking away of the chunks 620 from the centre chunk 621 and of the corner chunks 622 from the side chunks 623.

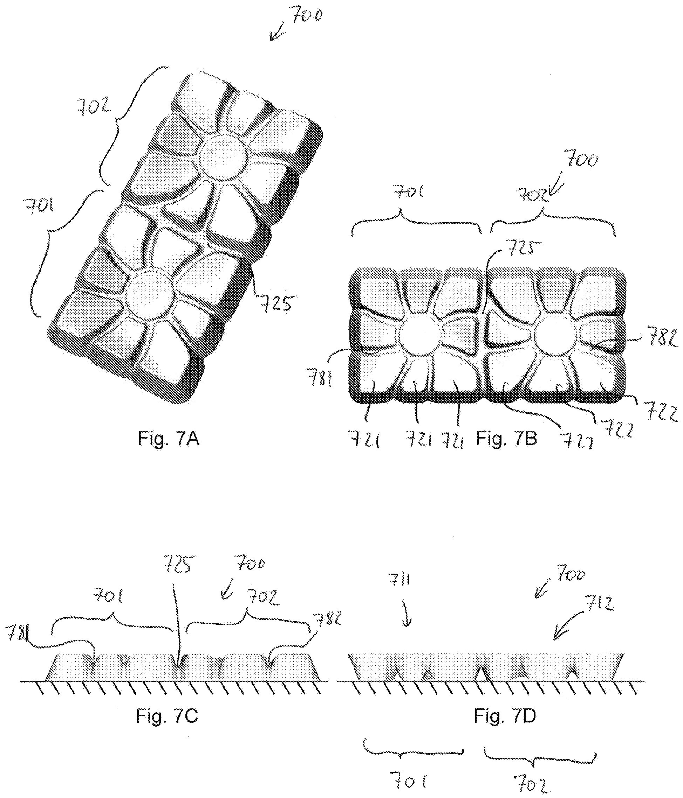

Figures 7A to 7D show a quadrilateral slab product 700 comprising a plurality (here: two) of slab sections 701 and 702, each being akin to that shown in Figures 6A to 6E. Each slab section 701 and 702 has its own breakage initiation region 711, 712, with each breakage initiation region 711, 712 being surrounded by a plurality (here: eight) of frangible portions 721, 722 connected to the respective breakage initiation region via predetermined breaking features 781 and 782. The slab sections 701 and 702 are connected by a groove 725 that is structurally weaker than the predetermined breaking features 781, 782 of the individual slabs 701 and 702. Thus, the slab product 700 may be broken into two slab sections 701 and 702 prior to smashing each slab section individually. Alternatively, one of the slab sections 701 and 702 may be smashed with the other slab section remaining connected. By way of this arrangement, the slab product 700 allows a consumer to carry out the smashing action twice, or to share the smashing experience with another consumer.

The smashing of the individual slab section independently of the connected slab section is achieved by providing a four-point contact at first end. By "four-point contact", it is meant that the first end is defined by four surface points that lie on a plane. Preferably, the four points are provided, one each, by each of the four corner chunks of each section. When the slab product is placed on a surface, with the first end facing towards the surface, only the four points of each section are in contact with the surface, thereby constituting the first end. As each of the two slab sections 701 and 702 of slab product 700 comprises a first end having a four-point contact, the slab will have an eight-point contact (2 sections with four contact points per section). As in the embodiment of Figures 6A to 6E, a dished recess, i.e., a recess that gradually thins from the periphery of each section towards the centre of each section, is defined between each four-point contact section 701 and 702.

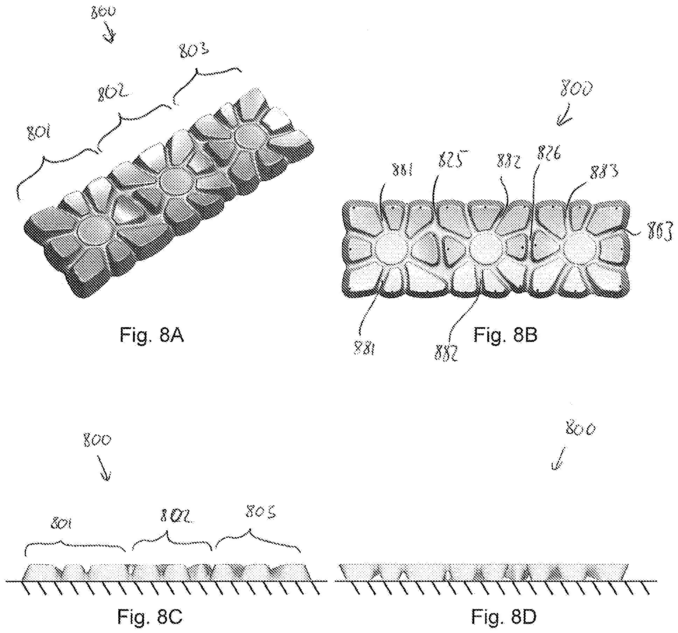

Figures 8A to 8D show a quadrilateral slab product 800 similar to the two-section embodiment of Figures 7A to 7E, but comprising three slab sections 801, 802, and 803. Individual frangible portions (here: eight chunks, surrounding a centre chunk) of a section are separated by grooves 881, 882, and 883, respectively. The sections 801 and 802 are separated by a groove 825, and the sections 802 and 803 are separated by a groove 826. Thus, the slab product 800 may be broken into slab sections prior to smashing each slab section 801, 802, or 803 individually. Alternatively, one of the slab sections 801, 802, or 803 may be smashed with the other slab section remaining intact. By way of this arrangement, the slab product 800 allows a consumer to carry out the smashing action three times, or to share the smashing experience with another consumer. Each of the sections 801, 802, 803 has four corner chunks providing a four-point contact when the slab 800 lies on a surface, in the orientation of Figure 8D.

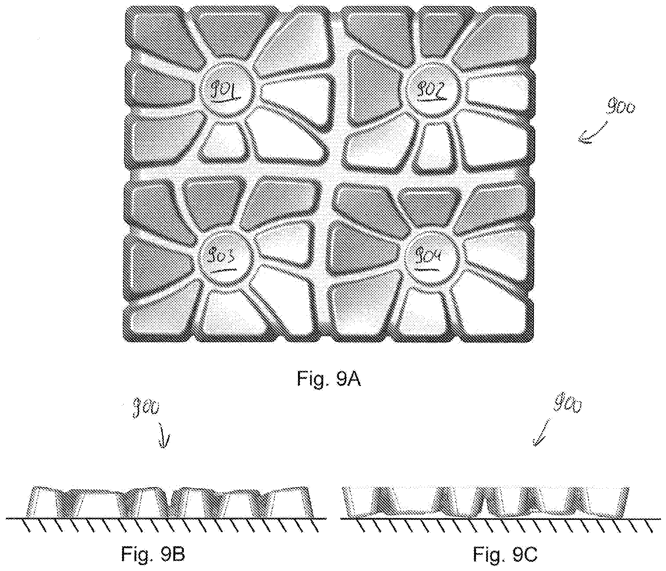

Figures 9A to 9C show a quadrilateral slab product 900 comprising four slab sections 901, 902, 903, and 904. It will be understood that each slab section can be smashed individually.

The slab products 700, 800, and 900 each allow the smashing action to be carried out multiple times.

The above-described exemplary embodiments will enable the skilled person to identify various modifications of the invention that fall within the scope of the claims.

## Claims

1. A confectionery product (100, 600) comprising:
a first end (140, 602) and a second end (150, 604),
a breakage initiation region (110, 610) at the second end of the product (150, 604), the breakage initiation region (110, 610) being constituted by a core,
a plurality of frangible portions (120, 620) extending outwardly from the breakage initiation region (110, 610) and terminating in free ends (130, 630), said free ends (130, 630) lying on a plane which constitutes the first end of the product (140, 602), and
a recess (160, 660) defined between the free ends (130, 630) and the breakage initiation region (110, 610),
wherein the plurality of frangible portions (120, 620) are connected to the breakage initiation region (110, 610) via a region of weakness (180, 680), and
wherein the frangible portions (120, 620) are configured to break apart from the product (100, 600) at the region of weakness (180, 680) when the first end of the product (140, 602) is placed onto a surface (170) and a manual force is applied to the breakage initiation region (110, 610) to depress the breakage initiation region (110, 610) into the recess (160, 660).

2. The confectionery product in accordance with claim 1, wherein the breakage initiation region (110, 610) comprises an outward-facing surface to which a force may be applied, optionally having an area of at least 1 cm², 2 cm², 3 cm², or 4 cm², 5 cm², 6 cm², 7 cm², 8 cm², 9 cm², 10 cm², or more than 12 cm², so as to be accessible for a human finger or knuckle.

3. The confectionery product in accordance with any one of the preceding claims, wherein individual frangible portions (120, 620) mutually interconnect at the breakage initiation region (110, 610).

4. The confectionery product in accordance with any one of the preceding claims, wherein all frangible portions (120, 620) are mutually separate, each joining the breakage initiation region (110, 610) at a different location thereof.

5. The confectionery product in accordance with any one of the preceding claims, wherein each free end (130, 630) of the frangible portions (120, 620) is configured to provide one of a single-point contact, a two-point contact, or a line contact with a surface (170) upon which the first end of the product (140, 602) is to be placed.

6. The confectionery product in accordance with any one of the preceding claims, wherein the free ends (130, 630) of the frangible portions (120, 620) are arranged towards or at the periphery of the product (100, 600), and/or wherein the breakage initiation region (110, 610) is located centrally of the product (100, 600).

7. The confectionery product in accordance with any one of the preceding claims, wherein the region of weakness (180, 680) is provided by a reduced cross-sectional area, by incorporating an aerated portion, by modifying the composition of the product, or any combination of these.

8. The confectionery product in accordance with any one of the preceding claims, comprising a first type of frangible portion (622) having a first shape and a second type of frangible portion (623) having a second shape different from the first shape, and wherein, optionally, the first end of the product (602) is constituted by the free ends (632) of the first type of frangible portion (622), and the free ends (633) of the second type of frangible portion (623) lie between the first end of the product (602) and the second end of the product (604).

9. The confectionery product in accordance with any one of the preceding claims, made from a composition having a freezing temperature below standard ambient temperature and pressure.

10. The confectionery product in accordance with any one of the preceding claims, further comprising a filling and/or inclusions, wherein the filing and/or the inclusions are optionally located within one or more of the frangible portions (120, 620).

11. A product (700, 800, 900) comprising a first confectionery product (701, 801, 901) in accordance with any one of the preceding claims, and further comprising a second confectionery product (702, 802, 902) in accordance with any one of the preceding claims, the second confectionery product (702, 802, 902) being connected to the first confectionery product (701, 801, 901) via a region of weakness (725, 825).

12. A mould suitable for the manufacture of a product in accordance with any one of the preceding claims, the mould comprising:
a mould body defining a mould cavity;
the mould cavity comprising a plurality of concave portions; and
a passage connecting the concave portions;
wherein each portion comprises a low point for formation of a free end of the product to be formed.

13. The mould in accordance with claim 12, wherein the low points lie on a common plane and are optionally peripheral within the mould.

14. The mould in accordance with claim 14 or 15, further comprising a plurality of projections separating the portions within the cavity.

15. A method of forming a product in accordance with any one of claims 1 to 11, the method including the steps of:
providing a mould in accordance with claim 13 or 14;
filling the mould with a flowable mass; and
letting the mass solidify, and optionally
demoulding.

## Patentansprüche

1. Süßwarenprodukt (100, 600), umfassend:
ein erstes Ende (140, 602) und ein zweites Ende (150, 604),
einen Bruchinitiierungsbereich (110, 610) an dem zweiten Ende des Produkts (150, 604), wobei der Bruchinitiierungsbereich (110, 610) aus einem Kern besteht,
eine Mehrzahl von brechbaren Abschnitten (120, 620), welche sich nach außen von dem Bruchinitiierungsbereich (110, 610) erstrecken und in freien Enden (130, 630) enden, wobei die freien Enden (130, 630) in einer Ebene liegen, welche das erste Ende des Produkts (140, 602) bildet, und
eine Ausnehmung (160, 660), welche zwischen den freien Enden (130, 630) und dem Initiierungsbereich (110, 610) definiert ist,
wobei die Mehrzahl von brechbaren Abschnitten (120, 620) mit dem Bruchinitiierungsbereich (110, 610) über einen Schwächungsbereich (180, 680) verbunden ist, und
wobei die brechbaren Abschnitte (120, 620) konfiguriert sind, um von dem Produkt (100, 600) in dem Schwächungsbereich (180, 680) abzubrechen, wenn das erste Ende des Produkts (140, 602) auf eine Fläche (170) gelegt wird und eine manuelle Kraft auf den Bruchinitiierungsbereich (110, 610) ausgeübt wird, um den Bruchinitiierungsbereich (110, 610) in die Ausnehmung (160, 660) hineinzudrücken.

2. Süßwarenprodukt nach Anspruch 1, wobei der Bruchinitiierungsbereich (110, 610) eine nach außen gerichtete Fläche umfasst, auf welche eine Kraft ausgeübt werden kann, optional aufweisend eine Oberfläche von mindestens 1 cm², 2 cm², 3 cm², oder 4 cm², 5 cm², 6 cm², 7 cm², 8 cm², 9 cm², 10 cm², oder mehr als 12 cm², um für einen menschlichen Finger oder Fingerknöchel zugänglich zu sein.

3. Süßwarenprodukt nach einem der vorhergehenden Ansprüche, wobei einzelne brechbare Abschnitte (120, 620) miteinander an dem Bruchinitiierungsbereich (110, 610) verbunden sind.

4. Süßwarenprodukt nach einem der vorhergehenden Ansprüche, wobei alle brechbare Abschnitte (120, 620) voneinander getrennt sind, wobei jeder mit dem Bruchinitiierungsbereich (110, 610) an einer unterschiedlichen Stelle desselben verbunden ist.

5. Süßwarenprodukt nach einem der vorhergehenden Ansprüche, wobei jedes freie Ende (130, 630) der brechbaren Abschnitte (120, 620) konfiguriert ist, um einen Einpunkt-Kontakt, einen Zweipunkt-Kontakt oder einen Linienkontakt mit einer Oberfläche (170) bereitzustellen, auf welcher das erste Ende des Produkts (140, 602) anzuordnen ist.

6. Süßwarenprodukt nach einem der vorhergehenden Ansprüche, wobei die freien Enden (130, 630) der brechbaren Abschnitte (120, 620) zu dem Umfang hin oder am Umfang des Produkts (100, 600) angeordnet sind, und/oder wobei der Bruchinitiierungsbereich (110, 610) mittig von dem Produkt (100, 600) angeordnet ist.

7. Süßwarenprodukt nach einem der vorhergehenden Ansprüche, wobei der Schwächungsbereich (180, 680) durch eine reduzierte Querschnittsoberfläche, durch Einschließen eines belüfteten Abschnitts, durch Ändern der Zusammensetzung des Produkts oder eine Kombination davon bereitgestellt ist.

8. Süßwarenprodukt nach einem der vorhergehenden Ansprüche, umfassend einen ersten Typ von brechbarem Abschnitt (622), welcher eine erste Form aufweist, und einen zweiten Typ von brechbarem Abschnitt (623), welcher eine zweite von der ersten Form unterschiedlichen Form aufweist, und wobei, optional, das erste Ende des Produkts (602) aus den freien Enden (632) des ersten Typs von brechbarem Abschnitt (622) besteht und die freien Enden (633) des zweiten Typs von brechbarem Abschnitt (623) zwischen dem ersten Ende des Produkts (602) und dem zweiten Ende des Produkts (604) liegen.

9. Süßwarenprodukt nach einem der vorhergehenden Ansprüche, bestehend aus einer Zusammensetzung, welche eine Gefriertemperatur unterhalb der standardmäßigen Umgebungstemperatur und des Umgebungsdrucks aufweist.

10. Süßwarenprodukt nach einem der vorhergehenden Ansprüche, ferner umfassend eine Füllung und/oder Einschlüsse, wobei die Füllung und/oder die Einschlüsse optional innerhalb eines oder mehrerer der brechbaren Abschnitte (120, 620) angeordnet sind.

11. Produkt (700, 800, 900), umfassend ein erstes Süßwarenprodukt (701, 801, 901) nach einem der vorhergehenden Ansprüche, und ferner umfassend ein zweites Süßwarenprodukt (702, 802, 902) nach einem der vorhergehenden Ansprüche, wobei das zweite Süßwarenprodukt (702, 802, 902) mit dem ersten Süßwarenprodukt (701, 801, 901) über einen Schwächungsbereich (725, 825) verbunden ist.

12. Form, ausgebildet zum Herstellen eines Produkts nach einem der vorhergehenden Ansprüche, wobei die Form Folgendes umfasst:
einen Formkörper, welcher einen Formhohlraum definiert;
wobei der Formhohlraum eine Mehrzahl von konkaven Abschnitten umfasst; und
einen Durchgang, welcher die konkaven Abschnitte verbindet;
wobei jeder Abschnitt einen unteren Punkt zum Bilden eines freien Endes des zu formenden Produkts umfasst.

13. Form nach Anspruch 12, wobei die unteren Punkte in einer gemeinsamen Ebene liegen und optional umfangsmäßig innerhalb der Form angeordnet sind.

14. Form nach Anspruch 14 oder 15, ferner umfassend eine Mehrzahl von Vorsprüngen, welche die Abschnitte innerhalb des Hohlraums trennen.

15. Verfahren zum Formen eines Produkts nach einem der Ansprüche 1 bis 11, wobei das Verfahren die folgenden Schritte umfasst:
Bereitstellen einer Form nach Anspruch 13 oder 14;
Füllen der Form mit einer fließbaren Masse; und
Verfestigen lassen der Masse und optionales
Ausformen.

## Revendications

1. Produit de confiserie (100, 600) comprenant :
une première extrémité (140, 602) et une deuxième extrémité (150, 604),
une région d'amorçage de rupture (110, 610) à la deuxième extrémité du produit (150, 604), la région d'amorçage de rupture (110, 610) étant constituée par un centre,
une pluralité de parties sécables (120, 620) s'étendant vers l'extérieur à partir de la région d'amorçage de rupture (110, 610) et se terminant par des extrémités libres (130, 630), lesdites extrémités libres (130, 630) se trouvant sur un plan constituant la première extrémité du produit (140, 602), et
un évidement (160, 660) défini entre les extrémités libres (130, 630) et la région d'amorçage de rupture (110, 610) ;
ladite pluralité de parties sécables (120, 620) étant reliées à la région d'amorçage de rupture (110, 610) par le biais d'une zone de faiblesse (180, 680), et
les parties sécables (120, 620) étant configurées pour se détacher du produit (100, 600) au niveau de la zone de faiblesse (180, 680) lorsque la première extrémité du produit (140, 602) est placée sur une surface (170) et qu'une force manuelle est appliquée sur la région d'amorçage de rupture (110, 610) afin d'enfoncer la région d'amorçage de rupture (110, 610) dans l'évidement (160, 660).

2. Produit de confiserie selon la revendication 1, dans lequel la région d'amorçage de rupture (110, 610) comprend une surface tournée vers l'extérieur sur laquelle une force peut être appliquée, présentant facultativement une superficie d'au moins 1 cm², 2 cm², 3 cm², ou 4 cm², 5 cm², 6 cm², 7 cm², 8 cm², 9 cm², 10 cm² ou de plus de 12 cm², lui permettant d'être accessible pour un doigt ou une articulation de doigt humain.

3. Produit de confiserie selon l'une quelconque des revendications précédentes, dans lequel des parties sécables (120, 620) individuelles sont reliées mutuellement au niveau de la région d'amorçage de rupture (110, 610).

4. Produit de confiserie selon l'une quelconque des revendications précédentes, dans lequel toutes les parties sécables (120, 620) sont séparées les unes des autres, chacune étant rattachée à la région d'amorçage de rupture (110, 610) en un emplacement différent sur celle-ci.

5. Produit de confiserie selon l'une quelconque des revendications précédentes, dans lequel chaque extrémité libre (130, 630) des parties sécables (120, 620) est configurée pour assurer un contact à point unique, un contact à point double ou un contact par le biais d'une ligne avec une surface (170) sur laquelle doit être placée la première extrémité du produit (140, 602).

6. Produit de confiserie selon l'une quelconque des revendications précédentes, dans lequel les extrémités libres (130, 630) des parties sécables (120, 620) sont agencées vers ou sur la périphérie du produit (100, 600), et/ou dans lequel la région d'amorçage de rupture (110, 610) est située au centre du produit (100, 600).

7. Produit de confiserie selon l'une quelconque des revendications précédentes, dans lequel la zone de faiblesse (180, 680) est fournie par une zone de section transversale réduite, par incorporation d'une partie à texture mousse, par modification de la composition du produit, ou par une combinaison de ces techniques.

8. Produit de confiserie selon l'une quelconque des revendications précédentes, comprenant un premier type de partie sécable (622) présentant une première forme et un deuxième type de partie sécable (623) présentant une deuxième forme différente de la première forme, et dans lequel, facultativement, la première extrémité du produit (602) est constituée par les extrémités libres (632) du premier type de partie sécable (622), et les extrémités libres (633) du deuxième type de partie sécable (623) se trouvent entre la première extrémité du produit (602) et la deuxième extrémité du produit (604).

9. Produit de confiserie selon l'une quelconque des revendications précédentes, réalisé à partir d'une composition dont la température de congélation est inférieure à la température et la pression ambiante standard.

10. Produit de confiserie selon l'une quelconque des revendications précédentes, comprenant en outre un fourrage et/ou des inclusions, ledit fourrage et/ou lesdites inclusions étant facultativement situées à l'intérieur d'une ou plusieurs des parties sécables (120, 620).

11. Produit (700, 800, 900) comprenant un premier produit de confiserie (701, 801, 901) selon l'une quelconque des revendications précédentes, et comprenant en outre un deuxième produit de confiserie (702, 802, 902) selon l'une quelconque des revendications précédentes, le deuxième produit de confiserie (702, 802, 902) étant relié au premier produit de confiserie (701, 801, 901) par le biais d'une zone de faiblesse (725, 825).

12. Moule approprié à la fabrication d'un produit selon l'une quelconque des revendications précédentes, le moule comprenant :
un corps de moule définissant une cavité de moule ;
la cavité de moule comprenant une pluralité de parties concaves ; et
un passage reliant les parties concaves ;
et dans lequel chaque partie comprend un point bas destiné à la formation d'une extrémité libre du produit à former.

13. Moule selon la revendication 12, dans lequel les points bas se trouvent sur un plan commun et sont facultativement périphériques au sein du moule.

14. Moule selon la revendication 14 ou 15, comprenant en outre une pluralité de saillies séparant les parties au sein de la cavité.

15. Procédé de formation d'un produit selon l'une quelconque des revendications 1 à 11, le procédé comportant les étapes consistant à :
mettre à disposition un moule selon la revendication 13 ou 14 ;
remplir le moule d'une matière fluide ; et
laisser la matière se solidifier, et facultativement
la démouler.
